Europäisches Patentamt

European Patent Office

Office européen des brevets

(11) Veröffentlichungsnummer : **0 354 471 B1**

# (12) EUROPÄISCHE PATENTSCHRIFT

(45) Veröffentlichungstag der Patentschrift :
**20.05.92 Patentblatt 92/21**

(51) Int. Cl.$^5$ : **C08G 18/48,** C08G 18/08, C09J 175/08

(21) Anmeldenummer : **89114337.2**

(22) Anmeldetag : **03.08.89**

(54) **Verwendung von wässrigen Polyurethan-Dispersionen als Haushaltsalleskleber sowie deren Herstellung.**

Verbunden mit 89908989.0/0428578 (europäische Anmeldenummer/Veröffentlichungsnummer) durch Entscheidung vom 25.06.91.
Die Akte enthält technische Angaben, die nach dem Eingang der Anmeldung eingereicht wurden und die nicht in dieserPatentschrift enthalten sind.

(30) Priorität : **12.08.88 DE 3827378**

(43) Veröffentlichungstag der Anmeldung :
**14.02.90 Patentblatt 90/07**

(45) Bekanntmachung des Hinweises auf die Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**FR-A- 2 366 319**

(56) Entgegenhaltungen :
**FR-A- 2 374 346**
**GB-A- 1 191 260**
**CHEMICAL ABSTRACTS, Band 108, Nr. 2, Januar 1988, Seite 49, Zusammenfassung Nr. 7166r, Columbus, Ohio, US; & JP-A-62 112676 (KURARAY CO., LTD) 23-05-1987, (Kat. D)**

(73) Patentinhaber : **Henkel Kommanditgesellschaft auf Aktien**
**Postfach 1100 Henkelstrasse 67**
**W-4000 Düsseldorf-Holthausen (DE)**

(72) Erfinder : **Höfer, Rainer, Dr.**
**Klever Strasse 31**
**W-4000 Düsseldorf 30 (DE)**
Erfinder : **Gierenz, Gerhard, Dr.**
**Dieselstrasse 80**
**W-5650 Solingen 19 (DE)**
Erfinder : **Klauck, Wolfgang, Dr.**
**Gelvenweg 2**
**W-4005 Meerbusch 2 (DE)**
Erfinder : **Grützmacher, Roland**
**Heinrich-Heine-Strasse 2**
**W-5603 Wülfrath (DE)**

## Beschreibung

Die Erfindung betrifft den Einsatz spezieller, im wesentlichen klarer, wäßriger und zumindest weitgehend lösemittelfreier Polyurethan-Dispersionen als Haushaltsalleskleber.

Haushaltsalleskleber - auch Vielzweckkleber genannt - haben den Zweck, eine Vielzahl im Haushalt vorkommender Substrate (Papier Pappe, Fotos, Textilien, Leder, Filz, Bast, Kork, Folien, Metalle wie Aluminium und Eisen, Porzellan, Keramik, Glas, Holz verschiedene Kunststoffe, wie auch z.B. Polystyrolschäume) zu verkleben. Dabei wird erwartet, daß auf dieser Vielzahl von Substraten, die sich in ihrer Oberflächenstruktur chemisch und physikalisch unterscheiden, und die üblicherweise vor dem Verkleben keiner speziellen Oberflächenbehandlung unterzogen werden, ausreichende Haftwirkung einstellt.

Im Vergleich zu der großen Vielzahl von Klebstoffklassen und -arten, die in Industrie und Handwerk eingesetzt werden, gibt es nur wenige Stoffe, die den hohen Anforderungen an die Universalität eines Haushaltssallesklebers gewachsen sind. Breite Verwendung hat dabei lediglich Polyvinylacetat und seine Copolymeren gefunden, das üblicherweise in Lösung oder für die Holzverklebung als Dispersion angeboten wird.

Die Forderung nach Universalität stellt für einen Klebstoff ein besonders hartes Auswahlkriterium dar. Sie bedeutet letztendlich, daß die Klebstoffmoleküle zu polaren wie unpolaren Grenzflächen in gleicher Weise hohe Affinität aufweisen müssen. Die Aussage, daß eine bestimmte Substanz als Klebstoff geeignet ist, gibt daher für den Fachmann noch keinen Hinweis, ob sie auch als Haushaltsalleskleber eingesetzt werden kann.

Neben der Forderung der Universalität besteht bei Haushaltssalesklebern neuerdings auch der Wunsch, geruchsneutrale, lösemittelfreie, physiologisch unbedenkliche, klare, wäßrige Formulierungen zu erreichen. Diese Formulierungen sollen jedoch gleichzeitig zu Klebstoffen führen, deren getrocknete Filme wiederum über eine gewisse Wasserfestigkeit verfügen. Darüber hinaus sollen diese wasserbasierten Klebstoffe auch in der Lage sein, schwierig klebbare Substrate, wie Kunststoffe, zu binden.

Dieses Anforderungsprofil konnte weder auf Basis der bisher für Alleskleber bevorzugten Bindemittel Polyvinylacetat und Vinylacetat-Copolymere noch durch Alternativen, wie Nitrocellulose in allen Punkten erfüllt werden. Zwar kann Polyvinylacetat lösemittelfrei in Form wäßriger Dispersionen hergestellt werden, diese Dispersionen sind jedoch nicht transparent, sondern milchig-weiß. Sie zeigen z. B. gute Gebrauchseigenschaften bei Verwendung als Holzleim. Auch die als Dispersionskleber weit verbreiteten Acrylate und Styrol-Acrylate sind in Form transparenter Haushaltsklebstoffe mit den genannten Eigenschaften im Markt nicht bekannt.

Es wurde nun überraschenderweise gefunden, daß speziell ausgewählte Ausführungsformen der seit Jahrzehnten bekannten wäßrigen Polyurethan-Dispersionen sich als Vielzweckalleskleber eignen. Polyurethan-Dispersionen bestehen aus Addukten mehrfunktioneller Isocyanate an mehrfunktionelle OH-Verbindungen, die einkondensiert Bausteine enthalten, die in wäßriger Lösung zur Salzbildung befähigt sind.

In der auf das Jahr 1966 zurückgehenden deutschen Offenlegungsschrift 15 95 602 wird in breiter Weise ein Verfahren zur Herstellung von kationisch modifizierten Polyurethan-Dispersionen beschrieben, die als dispergierende Komponente quartäre Ammoniumgruppen in einer Menge von mindestens 0,21 % enthalten. Die Offenlegungsschrift nennt zahlreiche Polyole, zahlreiche Isocyanatverbindungen und zahlreiche kationische salzbildende Komponenten als Modifizierungsmittel. Weiter genannt sind auch die hier üblichen Kettenverlängerungsmittel. Nach dem dort offenbarten Verfahren ist es möglich, optisch nahezu klare kolloidale Lösungen von Assoziaten herzustellen, die klebfreie oder klebende Filme ergeben. Erwähnt ist generell und ohne nähere Angaben auch die Verwendung der Produkte als Klebstoffe.

Die breite Offenbarung der DE 15 95 602 umfaßt sowohl Polyurethan-Dispersionen, bei denen als OH-funktionelle Komponente Polyester eingesetzt werden, als auch solche, bei denen Polyether oder Polyacetale verwendet werden. Polyurethan-Dispersionen auf Basis von Polyurethanen, die aus OH-funktionellen Polyestern aufgebaut sind, sind jedoch als Haushaltsalleskleber wenig geeignet, da sie bei Lagerung der Hydrolyse unterliegen und somit nicht die geforderte Lagerstabilität aufweisen. Polyurethan-Dispersionen, denen als OH-funktionelle Komponente Polyethylenoxid und/oder Polypropylenoxid zugrundeliegen, sind ebenfalls als Vielzweckkleber nicht geeignet, da sie schlechte Haftung auf Kunststoffoberflächen zeigen und somit das Erfordernis der Universalität nicht erfüllen.

Die DE 15 95 602 benennt zwar als mögliches Polyol Polytetrahydrofuran. Es findet sich jedoch kein Hinweis darauf, daß genau dieses Polyol eine geeignete Basis für Polyurethan-Dispersionen für Haushaltsallesskleber darstellt.

Aus der offengelegten japanischen Patentanmeldung Nr. 62(1987)-112676, veröffentlicht am 23.05.1987, ist ein wäßriger Polyurethan-Klebstoff bekannt, der eine wäßrige Polyurethandispersion umfaßt, die durch Umsetzen eines Polytetrahydrofurandiols mit einem mehrfunktionellen Isocyanat erhalten worden sind. Im einzelnen lehrt die japanische Offenlegungsschrift, daß Polytetrahydrofurandiol (Molekulargewicht 400 bis 2000) mit organischen Diisocyanaten und einer Dimethylolalkansäure umzusetzen, einem Kettenverlängerungsschritt mit Hydrazin zu unterwerfen und nach Neutralisation mit einem tertiären Amin mit einem wasserlöslichen Epoxid oder einem wasserlöslichen Aziridin umzusetzen. Die Verklebung wird dadurch erreicht, daß das Polyurethan mit seinen Carboxylendgruppen durch das Polyepoxid oder Polyaziridin vernetzt wird. Die japanische Anmeldung gibt keinen Hinweis darauf, daß derartige Polyurethandispersionen an sich bereits mit Vorteil als Haushaltsalleskleber eingesetzt werden können.

Aufgabe der Erfindung ist es daher, aufzuzeigen, daß spezielle wäßrige, transparente Polyurethan-Dispersionen den komplexen und teilweise widersprüchlichen vorher geschilderten Anforderungen an Haushaltsalleskleber genügen.

Gegenstand der Erfindung ist die Verwendung einer im wesentlichen klaren und zumindest weitgehend lösemittelfreien wäßrigen einkomponentigen Polyurethan-Dispersion auf Basis der Reaktionsprodukte

– einer ganz oder teilweise aus Polytetrahydrofuran bestehenden Polyolmischung,
– einer dazu im Verhältnis OH : NCO wie 1 : 0,5 bis 1 : 2,0 bevorzugt 1 : 1,0 bis 1 : 1,7 und insbesondere von 1 : 1,05 bis 1 : 1,6 eingesetzten zwei- oder mehrfunktionellen Isocyanatkomponente und
– Dimethylolpropionsäure als eine in wäßriger Lösung zur Salzbildung befähigte funktionelle Komponente

als Haushaltsalleskleber.

Die den erfindungsgemäß eingesetzten Polyurethan-Dispersionen zugrundeliegenden Polyurethane basieren auf einer ganz oder teilweise aus Polytetrahydrofuran bestehenden Polyolmischung, wobei der Gehalt an Polytetrahydrofuran, bezogen auf Polyolmischungen, nicht kleiner als 30 und vorzugsweise nicht kleiner als 70 Gew.-% sein soll. Unter Polytetrahydrofuran werden hier Polyether verstanden, die theoretisch oder tatsächlich durch ringöffnende Polymerisation von Tetrahydrofuran dargestellt werden können, und an beiden Kettenenden jeweils eine Hydroxylgruppe aufweisen. Geeignete Produkte haben dabei einen Oligomerisationsgrad von ca. 1,5 bis 150, vorzugsweise von 5 bis 100.

Neben der Polytetrahydrofurandiole können auch die analogen Verbindungen eingesetzt werden, bei denen die im Aufbau der Polyole beteiligten Tetrahydrofuraneinheiten bis zu 50 % durch Ethylenoxid oder Propylenoxid ersetzt sind. Unter diesen Verbindungen sind solche bevorzugt, die aus 25 bis 30 mol-% Ethylenoxid-Einheiten und 75 bis 70 mol-% Tetrahydrofuranoxid-Einheiten aufgebaut sind. Außer den Diolen auf Basis Tetrahydrofuran können auch die analogen Diamine mit verwendet werden.

Die den erfindungsgemäß eingesetzten Polyurethan-Dispersionen zugrundeliegenden Polytetrahydrofuranpolyole können weiterhin bis zu 70 Gew.-% durch andere, in derartigen Zubereitungen übliche Polyole ersetzt sein. Ganz allgemein gilt hier, daß diese anderen Polyole über zumindest zwei reaktionsfähige Wasserstoffatome verfügen müssen und im wesentlichen linear sind, wobei das Molekulargewicht zwischen 300 und 20.000, vorzugsweise zwischen 500 und 6.000 liegen kann. Bevorzugt sind hier Polyester, Polyacetale, Polyether, Polythioether, Polyamide und/oder Polyesteramide, die jeweils im Mittel 2 bis 4 Hydroxylgruppen aufweisen.

Als Polyether seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Auch isotaktisches Polypropylenglykol kann Verwendung finden.

Als Polyacetale kommen z. B. die aus Glykolen wie Diethylenglykol, Triethylenglykol, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, sowie z.B. Polyterephthalate oder Polycarbonate. Auch Polyester aus Lactonen, z. B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z. B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol.

Als Polyisocyanate in den erfindungsgemäßen Polyurethan-Dispersionen sind alle aromatischen und aliphatischen Diisocyanate geeignet, wie z. B. 1,5-Naphthylendiisocyanat, 4.4′-Diphenylmethandiisocyanat, 4,4′-Diphenyldimethylmethandiisocyanat, Di- und Tetraalkyldiphenylmethandiisocyanat, 4,4′-Dibenzyldiisocyanat, 1,3-Phenylendiisocyanat, 1,4-Phenylendiisocyanat, die Isomeren des Toluylendiisocyanats, gegebenenfalls in Mischung, 1-Methyl-2,4-diisocyanato-cyclohexan, 1,6-Diisocyanato-2,2,4-trimethyl-hexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4′-Diisocyanatophenyl-perfluorethan, Tetramethoxy-butan-1,4-diisocyanat, Butan-1,4-diisocyanat, Hexan-1,6-diisocyanat, Dicyclohexylmethandiisocyanat, Cyclohexan-1,4-diisocyanat, Ethylen-diisocyanat, Phthalsäure-bisisocyanatoethylester, ferner Polyisocyanate mit reaktionsfähigen Halogenatomen, wie 1-Chlormehtlyphenyl-2,4-diisocyanat, 1-Brommethylphenyl-2,6-diisocyanat, 3,3-Bis-chlormethylether-4,4′-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Ein bevorzugtes Diisocyanat ist Isophorondiisocyanat. Weitere wichtige Diisocyanate sind Trimethylhexamethylendiisocyanat, meta- und/oder para-Tetramethylxyloldiisocyanat, 1,4-Diisocyanatobutan, 1,2-Diisocyanatododecan und Dimerfettsäure-diisocyanat. Die vorgenannten Isocyanate können allein oder auch in Mischung eingesetzt werden. Bevorzugt sind cyclische oder verzweigte aliphatische Diisocyanate wie Isophorondiisocyanat.

Interesse verdienen teilweise verkappte Polyisocyanate, welche die Bildung selbstvernetzender Polyurethane ermöglichen, z.B. dimeres Toluylendiisocyanat, oder mit beispielsweise Phenole, tertiärem Butanol, Phthalimid, Caprolactam partiell umgesetzte Polyisocyanate.

Die den erfindungsgemäß eingesetzten Polyurethan-Dispersionen zugrundeliegenden Polyurethane haben weiterhin als wichtigen Bestandteil Dimethylolpropionsäure als eine in wäßriger Lösung zur Salzbildung befähigte funktionelle Komponente.

Erfindungsgemäß ist es bevorzugt, die zu verwendenden Polyurethan-Prepolymeren über die Menge der einreagierten Dimethylolpropionsäure wasserlöslich einzustellen, da derartige modifizierte Polyurethan-Dispersionen unter alkalischen Bedingungen wieder abgelöst werden können, d.h. derartige Klebstoffe sind unter Waschbedingungen aus bestimmten Substraten, z.B. aus Textilien wieder entfernbar.

In den erfindungsgemäß eingesetzten Polyurethan-Dispersionen liegen die Polymeren in Salzform vor. Bei den mit Dimethylolpropionsäure modifizierten Polymeren liegen als Gegenionen Alkalimetallsalze, Ammoniak oder Amine, d.h. primäre, sekundäre oder tertiäre Amine vor. Die zur Salzbildung befähigten Gruppen können durch die Gegenionen teil- oder vollständig neutralisiert werden. Auch ein Überschuß an Neutralisationsmittel ist möglich.

Verbindungen mit gesundheitsschädlichen oder -beeinträchtigenden Eigenschaften sind nicht erwünscht. Dies gilt um so mehr, als es sich bei der vorliegenden Erfindung um einen universell einsetzbaren Alleskleber handelt, der vermutlich auch von gesundheitlich stärker gefährdeten Personenkreisen, wie Kindern, Alten, Kranken, Schwangeren etc. verwendet werden wird. Deshalb ist bei einer besonders bevorzugten Ausführungsform physiologisch bedenkliche Stoffe zu verzichten und bei allen Komponenten des Klebstoffs auf eine möglichst weitgehende physiologische Unbedenklichkeit zu achten. Dazu zählt z.B. der teilweise, nach Möglichkeit vollständige Verzicht auf organische Lösungsmittel. Die im Zusammenhang mit Polyurethanklebstoffen oftmals diskutierte Gesundheitsgefährdung durch freie Isocyanate bzw. nicht abreagierte NCO-Gruppen der Polymeren oder Prepolymeren ist bei der vorliegenden Erfindung gegenstandslos, da hier die Polyurethane in Wasser dispergiert sind und Isocyanatgruppen, wie dem Fachmann bekannt ist, sofort mit Wasser abreagieren, so daß als sichergestellt gelten kann, daß die vorliegenden erfindungsgemäßen Polyurethandispersionen keine reaktiven NCO-Gruppen aufweisen.

Zur Herstellung der für die erfindungsgemäßen Zwecke insbesondere geeigneten Polyurethane werden die Polyole und ein Überschuß an Diisocyanat unter Bildung eines Polymers mit endständigen Isocyanatgruppen umgesetzt, wobei geeignete Reaktionsbedingungen und Reaktionszeiten sowie Temperaturen je nach dem betreffenden Isocyanat variiert werden können. Der Fachmann weiß, daß die Reaktionsfähigkeit der umzusetzenden Bestandteile ein entsprechendes Gleichgewicht zwischen Reaktionsgeschwindigkeit und unerwünschten Nebenreaktionen, die zu einer Verfärbung und Molekulargewichtsverringerung führen, notwendig macht. Typischerweise wird die Reaktion unter Rühren bei ungefähr 50 bis ungefähr 120°C innerhalb von ungefähr 1 bis 6 Stunden durchgeführt.

Bevorzugtes Herstellverfahren ist das sogenannte Acetonverfahren (D. Dietrich, Angew. Makromol. Chem. 98, 133 (1981)). Weiterhin können die erfindungsgemäß eingesetzten Polyurethan-Dispersionen auch nach dem Verfahren der DE 15 95 602 hergestellt werden. Ein neueres Verfahren zur Herstellung von Polyurethan-Dispersionen ist in der DE 36 03 996 sowie in dem dort angegebenen Stand der Technik, nämlich: DE-PS 8 80 485, DE-AS 10 44 404, US-PS 30 36 998, DE-PS 11 78 586, DE-PS 11 84 946, DE-AS 12 37 306, DE-AS 14 95 745, DE-OS 15 95 602, DE-OS 17 70 068, DE-OS 20 19 324, DE-OS 20 35 732, DE-OS 24 46 440, DE-OS 23 45 256, DE-OS 24 27 274, US-PS 34 79 310 und Angewandte Chemie 82,53 (1970) und Angew. Makromol. Chem. 26,85 ff. (1972) beschrieben.

Von den genannten Verfahren ist insbesondere das "Acetonverfahren" in Analogie zur Lehre der DE-OS 14 95 745 (= US-PS 34 79 310) bzw. zu der DE-OS 14 95 847 (GB-PS 10 67 788) von Bedeutung. Hierbei wird im allgemeinen zunächst ein Prepolymer mit -NCO Endgruppen hergestellt, welches anschließend in einem inerten Lösungsmittel gelöst wird. Der Einbau der für die Dispergierung erforderlichen hydrophilen Gruppen erfolgt durch Einbau von Dimethylolpropionsäure. Die Dispergierung erfolgt diskontinuierlich in Rührkesseln mit Rührer und evtl. Strombrechern. Das verwendete Lösemittel wird in der Regel unmittelbar nach der Dispergierung in Wasser aus dem Rührkessel abdestilliert.

Weitere Verfahren zur Herstellung von Polyurethan-Prepolymeren, insbesondere zur kontinuierlichen Herstellung von Polyurethan-Prepolymeren, sind in den deutschen Offenlegungsschriften 22 60 870, 23 11 635 und 23 44 135 beschrieben.

Um im wesentlichen klare, d. h. opake bis wasserklare Polyurethan-Dispersionen zu erhalten, muß der Fachmann auf ein bestimmtes Verhältnis zwischen der zur Salzbildung befähigten Komponente und den übrigen, das Polyurethan aufbauenden Stoffe achten. So ist es zweckmäßig, die zur Salzbildung befähigte Komponente - hier Dimethylolpropionsäure - in Mengen von 1 bis 70, vorzugsweise von 2 bis 30, und insbesondere von 10 bis 18 Gew.-%,bezogen auf Polyol, einzusetzen. Weiterhin hängt die Transparenz vom Neutralisationsgrad ab. Dabei kann der Fachmann durch wenige Vorversuche feststellen, ab welcher Menge an Ionenbildung befähigtem Modifizierungsmittel bzw. ab welcher Menge an Neutralisationsmittel ein ausreichender Grad an transparenz erreicht ist. Im allgemeinen wird so wenig wie möglich von diesen Stoffen eingesetzt werden, da sie bei überhöhtem Einsatz die Wasserfestigkeit des Klebefilms stören können.

Unter den erfindungsgemäßen Polyurethan-Dispersionen werden zweiphasige Wasser/Polyurethan-Systeme verstanden, welche bevorzugt kolloidale Systeme und Sole mit Teilchendurchmessern von ca. 10 bis 100 nm umfassen. Diese Systeme sind vorzugsweise optisch opak bis transparent. Davon abzugrenzen sind optisch klare "echte" Lösungen.

Der Feststoffgehalt der erfindungsgemäßen Klebstofflösungen kann in weiten Grenzen variiert werden. In der Praxis haben sich Feststoffgehalte zwischen 20 und 70 Gew.-%, insbesondere zwischen 30 und 50 Gew.-% bewährt.

**Beispiele**

Allgemeine Herstellvorschriften

Die Polyole werden mit Aceton verdünnt oder darin gelöst bzw. dispergiert. Unter Rühren erfolgt dann die Zugabe der Dimethylolpropionsäure. Bei Temperaturen zwischen 50 und 70°C wird dann Diisocyanat so lange zugegeben, bis der NCO-Gehalt nicht mehr sinkt. Bei 60°C wird dann neutralisiert, z. B. mit N-Methylmorpholin. Nach einer Dauer von ca. 30 Minuten erfolgt dann die Zugabe von Wasser. Nach 30minütigem Dispergieren wird dann das Aceton abdestilliert, später unter höherem Vakuum bei Temperaturen von 55 bis 60°C.

|  | Beispiel | Vergleichs-beispiel 1 |
|---|---|---|
| Polytetrahydrofuran | 100GT | - |
| Polyetherpolyol, gestartet auf Glycerin, OHZ 34 | - | 100 GT |
| Oleochemisches Polyol entsprechend DE 37 04 350 OHZ 160 | - | 82 GT |
| Dimethylolpropionsäure | 15,58 GT | 21,50 GT |
| Aceton | 50GT | 50GT |
| Isophorondiisocyanat | 48,9GT | 98,05GT |
| N-Methylmorpholin | 11,63GT | 16,04GT |
| Wasser deionisiert | 233GT | 450GT |

<u>Klebekraft</u> (Zugscherfestigkeiten) Anlehnung an "DIN 53254"

|  | Beispiel | Vergleichs-beispiel 1 | Alles-kleber, Lösungs-mittel-basis | PVAc Dispersion |
|---|---|---|---|---|
| Holz/PVC $Nmm^{-2}$ | 6,0 | 1,4 | n. b. | 1,6 |
| Holz/Holz $Nmm^{-2}$ | 8,5 | 4,5 | 6 - 7 | 3,0 |
| Holz/Alu $Nmm^{-2}$ | 6,0 | 4,9 | 1,4 | 2,0 |
| Holz/ABS $Nmm^{-2}$ | 5,0 | 1,4 | 5,5 unter Anquellung des ABS | 1,5 |

<u>60μm - Wert an Chrompapier</u>

Auftragen eines 60 μm Klebstoffilms mit einem Spiralrakel auf Chrompapier. Sofortiges Verkleben mit gleichartigem Papier. Langsames Aneinanderschaben bis zum Materialriß in Zeiteinheit:

| Beispiel | Vergleichs-beispiel 1 | Alleskleber, Lösungsmittel-basis | PVAc-Dispersion |
|---|---|---|---|
| 15 sec. | 20 sec. | 70 sec. | 25 sec. |

| | Vergleichsbeispiel 2 | Vergleichsbeispiel 3 | Vergleichsbeispiel 4 |
|---|---|---|---|
| Polyesterdiol Molgewicht ca. 2.000 OH-Zahl 60 | 100 | 100 | 100 |
| Dimethylolpropionsäure (DMPA) | 15,9 | 17,3 | 16,4 |
| Aceton | 45,0 | 45,0 | 45,0 |
| Isophorondiisocyanat | 50,6 | 59,3 | 57,2 |
| N-Methyl-2-morpholin | 11,9 | 13,0 | 12,2 |
| Wasser deionisiert | 256 | 265 | 265 |
| Klebekraft (Anlehnung an "DIN 53254") | | | |
| Holz/Kunststoff (PVC) $Nmm^{-2}$ | 5,2 (B) | 3,5 (B) | 6,0 (B) |
| Holz/Holz | 6,3 (B) | 8,3 (B) | 7,5 (B) |
| Holz/Alu (B = Bruch) | 5,6 (B) | 5,5 (B) | 8,5 (B) |

EP 0 354 471 B1

Lagertest

Erfindungsgemäß einzusetzende Polyurethan-Dispersionen gemäß Beispiel und gemäß den Vergleichsbeispielen 1 bis 4 wurden einem Lagertest bei Temperaturen von 50 C unterzogen. Es wurde die folgende Entwicklung der Viskosität beobachtet:

|  | Ausgangsviskosität (m Pas) | Viskosität nach 3 Monaten (m Pas) |
|---|---|---|
| Beispiel | 4000 | 4050 |
| Vergleichsbeispiel 1 | 4000 | 3700 |
| Vergleichsbeispiel 2 | 3700 | 180 |
| Vergleichsbeispiel 3 | 3500 | 120 |
| Vergleichsbeispiel 4 | 3600 | 410 |

**Patentansprüche**

1. Verwendung einer im wesentlichen klaren und zumindest weitgehend lösemittelfreien wäßrigen einkomponentigen Polyurethan-Dispersion auf Basis der Reaktionsprodukte
   – einer ganz oder teilweise aus Polytetrahydrofuran bestehenden Polyolmischung,
   – einer dazu im Verhältnis OH : NCO wie 1 : 0,5 bis 1 : 2,0 vorzugsweise 1 : 1,0 bis 1 : 1,7 und insbesondere 1 : 1,05 bis 1 : 1,6 eingesetzten zwei- oder mehrfunktionellen Isocyanatkomponente und
   – Dimethylolpropionsäure als eine in wäßriger Lösung zur Salzbildung befähigte funktionelle Komponente als Haushaltsalleskleber.

2. Verwendung nach Anspruch 1, dadurch gekennzeichnet, daß die den Polyurethan-Dispersionen zugrundeliegenden Polyolmischungen zu 30 bis 100 Gew.-% aus Polytetrahydrofuran und zu 0 bis 70 Gew.-% aus einem Polyetherpolyol, Polyacetalpolyol und/oder Polyesterpolyol mit im Mittel 2 bis höchstens 4 OH-Gruppen bestehen.

3. Verwendung nach einem der Ansprüche 1 oder 2, dadurch gekennzeichnet, daß die den Polyurethan-Dispersionen zugrundeliegenden Polyolmischungen zu 70 bis 100 Gew.-% aus Polytetrahydrofuran bestehen.

4. Verwendung nach einem der vorstehenden Ansprüche, dadurch gekennzeichnet, daß die den Polyurethan-Dispersionen zugrundeliegenden Polyurethane aus zwei- oder mehrfunktionellen aliphatischen und/oder aromatischen Polyisocyanaten, vorzugsweise aus verzweigten oder cyclischen aliphatischen Diisocyanaten aufgebaut sind.

5. Verwendung nach einem der vorstehenden Ansprüche, dadurch gekennzeichnet, daß die den Polyurethan-Dispersionen zugrundeliegenden Polyurethane einkondensierte Dimethylolpropionsäure enthalten, die als Alkalisalz, Ammoniumsalz oder als Salz primärer, sekundärer oder tertiärer Amine vorliegt.

6. Verwendung nach einem der vorstehenden Ansprüche, dadurch gekennzeichnet, daß die Menge der Dimethylolpropionsäure 1 bis 70 Gew.-% vorzugsweise 2 bis 30 Gew.-% und insbesondere 10 bis 18 Gew.-% bezogen auf Polyol beträgt.

7. Verfahren zur Herstellung eines Haushaltsallesklebers nach einem der vorstehenden Ansprüchen, dadurch gekennzeichnet, daß
   – zunächst ein Prepolymer mit NCO-Endgruppen aus
      – einer ganz oder teilweise aus Polytetrahydrofuran bestehenden Polyolmischung,
      – einer dazu im Verhältnis OH : NCO wie 1 : 0,5 bis 1 : 2,0 vorzugsweise 1 : 1,0 bis 1 : 1,7 und insbesondere 1 : 1,05 bis 1 : 1,6 eingesetzten zwei- oder mehrfunktionellen Isocyanatkomponente und

EP 0 354 471 B1

– Dimethylolpropionsäure als eine in wäßriger Lösung zur Salzbildung befähigte funktionelle Komponente hergestellt,

– anschließend in einem inerten Lösungsmittel gelöst wird,

– anschließend die Dispergierung diskontinuierlich in Rührkesseln mit Rührer und gewünschtenfalls Strombrechern vorgenommen wird und

– das verwendete Lösemittel gewünschtenfalls unmittelbar nach der Dispergierung in Wasser aus dem Rührkessel abdestilliert wird.

8. Verfahren zur Herstellung eines Haushaltsallesklebers nach einem der vorstehenden Ansprüchen, dadurch gekennzeichnet, daß

– die Polyolkomponente mit Aceton verdünnt oder darin gelöst bzw. dispergiert wird,

– unter Rühren die Zugabe der Dimethyololpropionsäure erfolgt,

– bei Temperaturen zwischen 50 und 70°C Diisocyanat so lange zugegeben wird, bis der NCO-Gehalt nicht mehr sinkt,

– anschließend bei 60°C neutralisiert wird,

– nach einer Dauer von ca. 30 Minuten dann die Zugabe von Wasser erfolgt und

– nach 30-minütigem Dispergieren das Aceton, später unter höherem Vakuum bei Temperaturen von 55 bis 60°C, abdestilliert wird.

## Claims

1. The use of a substantially clear and at least largely solventless, aqueous, one-component polyurethane dispersion based on the reaction products of

– a polyol mixture consisting completely or partly of polytetrahydrofuran,

– a difunctional or more than difunctional isocyanate component used in an OH:NCO ratio of 1:0.5 to 1:2.0, preferably 1:1.0 to 1:1.7 and more preferably 1:1.05 to 1:1.6 thereto and

– dimethylol propionic acid as a functional component capable of salt formation in aqueous solution as a universal household adhesive.

2. The use claimed in claim 1, characterized in that 30 to 100% by weight of the polyol mixtures on which the polyurethane dispersions are based consist of polytetrahydrofuran and 0 to 70% by weight of a polyether polyol, polyacetal polyol and/or polyester polyol containing on average 2 to at most 4 OH groups.

3. The use claimed in claim 1 or 2, characterized in that 70 to 100% by weight of the polyol mixtures on which the polyurethane dispersions are based consist of polytetrahydrofuran.

4. The use claimed in any of the preceding claims, characterized in that the polyurethanes on which the polyurethane dispersions are based are synthesized from difunctional or more than difunctional aliphatic and/or aromatic polyisocyanates, preferably from branched or cyclic aliphatic diisocyanates.

5. The use claimed in any of the preceding claims, characterized in that the polyurethanes on which the polyurethane dispersions are based contain co-condensed dimethylol propionic acid which may be present as an alkali metal salt, ammonium salt or as a salt of primary, secondary or tertiary amines.

6. The use claimed in any of the preceding claims, characterized in that the quantity of dimethylol propionic acid used is from 1 to 70% by weight, preferably from 2 to 30% by weight and more preferably from 10 to 18% by weight, based on polyol.

7. A process for the production of the universal household adhesive claimed in any of the preceding claims, characterized in that

– an NCO-terminated prepolymer is initially prepared from

– a polyol mixture consisting completely or partly of polytetrahydrofuran,

– a difunctional or more than difunctional isocyanate component used in an OH:NCO ratio of 1:0.5 to 1:2.0, preferably 1:1.0 to 1:1.7 and more preferably 1:1.05 to 1:1.6 thereto and

– dimethylol propionic acid as a functional component capable of salt formation in aqueous solution

– and is then dissolved in an inert solvent,

– dispersion is then carried out discontinuously in stirred tanks comprising stirrers and, optionally baffles and

– the solvent used is distilled off from the stirred tank, if desired immediately after dispersion in water.

8. A process for the production of the universal household adhesive claimed in any of the preceding claims, characterized in that

– the polyol component is diluted with acetone or is dissolved or dispersed therein,

– the dimethylol propionic acid is added with stirring,

– diisocyanate is added at temperatures of 50 to 70°C until there is no further reduction in the NCO content,

– the product is neutralized at 60°C,

– water is added after about 30 minutes and

– after dispersion for 30 minutes, the acetone is distilled off, subsequently in a relatively high vacuum at temperatures of 55 to 60°C.


**Revendications**

1. Utilisation, comme colle universelle à usage domestique, d'une dispersion de polyuréthane aqueuse à un composant essentiellement claire et au moins largement sans solvant, à base des produits de réaction ci-après:

– un mélange de polyols constitué en totalité ou en partie de polytétrahydrofurane,

– un composant isocyanate bi- ou polyfonctionnel mis en oeuvre à cet effet dans un rapport OH:NCO, tel que 1:05 à 1:2,0, de préférence 1:1,0 à 1:1,7 et, en particulier, 1:1,05 à 1:1,6 et

– de l'acide diméthylolpropionique comme composant fonctionnel susceptible de salification en solution aqueuse.

2. Utilisation selon la revendication 1, caractérisée en ce que les mélanges de polyols à la base des dispersions de polyuréthane sont constitués à raison de 30 à 100 % en poids de polytétrahydrofurane et à concurrence de 0 à 70 % en poids d'un polyétherpolyol, d'un polyacétalpolyol et/ou d'un polyesterpolyol avec en moyenne 2 à au maximum 4 groupements OH.

3. Utilisation selon l'une des revendications 1 ou 2, caractérisée en ce que les mélanges de polyols à la base des dispersions de polyuréthane sont constitués à raison de 70 à 100 % en poids de polytétrahydrofurane.

4. Utilisation selon l'une des revendications qui précèdent, caractérisée en ce que les polyuréthane à la base des dispersions de polyuréthane sont constitués de polyisocyanates aliphatiques et/ou aromatiques di- ou polyfonctionnels, de préférence constitués de diisocyanates aliphatiques ramifiés ou cycliques.

5. Utilisation selon l'une des revendications qui précèdent, caractérisée en ce que les polyuréthane à la base des dispersions de polyuréthane comportent de l'acide diméthylolpropionique incorporé par condensation, qui est présent sous la forme de sel de métal alcalin, de sel d'ammonium ou de sel d'amines primaires, secondaires ou tertiaires.

6. Utilisation selon l'une des revendications qui précèdent, caractérisée en ce que la proportion de l'acide diméthylolpropionique atteint 1 à 70 % en poids, de préférence 2 à 30 % en poids et, en particulier, 10 à 18 % en poids, par rapport au polyol.

7. Procédé de préparation d'une colle universelle à usage domestique, selon l'une des revendications qui précèdent, caractérisé en ce que

– l'on commence par préparer un prépolymère comportant des groupements NCO terminaux constitué de:

– un mélange de polyols composé en totalité ou en partie d'un polytétrahydrofurane,

– un composant isocyanate di- ou polyfonctionnel mis en oeuvre dans un rapport OH:NCO, tel que 1:0,5 à 1:2,0, de préférence 1:1,0 à 1:1,7 et, en particulier, 1:1,05 à 1:1,6 et

– de l'acide diméthylolpropionique comme composant fonctionnel susceptible de salification en solution aqueuse,

– qui est ensuite dissous dans un solvant inerte,

– la dispersion est ensuite opérée de façon discontinue dans une cuve à agitation pourvue d'un agitateur et, éventuellement, de dispositifs d'interruption du courant et

– le solvant utilisé est, au besoin, immédiatement chassé par distillation de la cuve à agitation, après la dispersion dans l'eau.

8. Procédé de préparation d'une colle universelle à usage domestique, selon l'une des revendication qui précèdent, caractérisé en ce que:

– le composant polyol est dilué à l'acétone ou bien dissous ou dispersé dans celui-ci.

– l'acide diméthylolpropionique est ajouté sous agitation,

– le diisocyanate est ajouté à des températures comprises entre 50 et 70 °C, jusqu'à ce que la teneur en NCO cesse de s'abaisser,

– une neutralisation est ensuite opérée à 60 °C,

– après env. 30 minutes, l'eau est ajoutée et

– après dispersion pendant 30 minutes, l'acétone est chassé par distillation, ultérieurement sous vide plus poussé à des températures allant de 55 à 60 °C.